Europäisches Patentamt

European Patent Office

Office européen des brevets

(11) Veröffentlichungsnummer : **0 169 363**
**B1**

# EUROPÄISCHE PATENTSCHRIFT

(45) Veröffentlichungstag der Patentschrift :
23.03.88

(51) Int. Cl.⁴ : **B 60 S 1/34**

(21) Anmeldenummer : **85107386.6**

(22) Anmeldetag : **14.06.85**

(54) Vorrichtung, insbesondere Hubwischeranlage für Kraftfahrzeuge.

(30) Priorität : **19.07.84 DE 3426607**

(43) Veröffentlichungstag der Anmeldung :
**29.01.86 Patentblatt 86/05**

(45) Bekanntmachung des Hinweises auf die Patenterteilung : **23.03.88 Patentblatt 88/12**

(84) Benannte Vertragsstaaten :
**FR GB IT**

(56) Entgegenhaltungen :
**DE-A- 2 430 163**
**FR-A- 2 548 605**

(73) Patentinhaber : **SWF Auto-Electric GmbH**
**Stuttgarter Strasse 119 Postfach 135**
**D-7120 Bietigheim-Bissingen (DE)**

(72) Erfinder : **Egner-Walter, Bruno**
**Käferflugstrasse 43**
**D-7100 Heilbronn (DE)**
Erfinder : **Neubauer, Walter**
**Eberhardstrasse 13**
**D-7128 Lauffen (DE)**
Erfinder : **Schmid, Eckhardt**
**Heilbronnerstrasse 62**
**D-7129 Brackenheim (DE)**
Erfinder : **Scholl, Wolfgang**
**Gartenstrasse 16**
**D-7121 Gemmrigheim (DE)**

## Beschreibung

Die Erfindung geht aus von einer Vorrichtung, insbesondere von einer Hub-Wischeranlage für Kraftfahrzeuge, die die Merkmale aus dem Oberbegriff des Anspruchs 1 aufweist.

Die Lagerung des Kolbens einer derartigen bekannten Vorrichtung soll genau und langlebig sein. Auch kann es nötig sein, den Kolben so zu führen, daß er nicht um seine Längsachse verdreht werden kann. So greifen zum Beispiel bei einer Hub-Wischeranlage, bei der am Kolben ein Wischarm befestigt ist, der ein Wischblatt über eine Scheibe eines Kraftfahrzeugs bewegen soll, Kräfte am Kolben an, die diesen um seine Längsrichtung verdrehen wollen. Wird der Kolben über einen Kurbeltrieb hin- und herbewegt, so wirken auch dadurch evtl. Torsionskräfte auf ihn ein.

Für eine gute Führung des Kolbens kann man sich verschiedene Anordnungen vorstellen. So ist es zum Beispiel möglich, den Kolben in zwei Lagern, die einen Abstand voneinander haben, zu lagern. Dazu ist am Ende des Kolbens ein Schlitten befestigt, der sich wenigstens annähernd senkrecht zum Kolben erstreckt und beidseitig des Kolbens an zwei gehäusefesten Führungselementen längsgeführt ist.

Während die beiden Lager die Längsrichtung des Kolbens bestimmen, wird dieser durch den Schlitten gegen Verdrehung gesichert.

Eine andere Möglichkeit ist, den Kolben direkt nur in einem Lager zu lagern und den Schlitten und die Führungselemente so zu gestalten und zueinander anzuordnen, daß durch die drei Lagerstellen die Längsrichtung des Kolbens vorgegeben ist und zugleich eine Verdrehsicherung des Kolbens erreicht wird.

Aufgabe der Erfindung ist es, eine Vorrichtung, insbesondere eine Hub-Wischeranlage für Kraftfahrzeuge, die die Merkmale aus dem Oberbegriff des Anspruchs 1 aufweist, so weiterzuentwickeln, daß auch ohne eine genaue Einstellung der Führungselemente eine sichere und weitgehend verklemmungsfreie Führung des Kolbens erhalten wird.

Diese Aufgabe wird erfindungsgemäß dadurch gelöst, daß man eine Vorrichtung, insbesondere eine Hub-Wischeranlage für Kraftfahrzeuge, mit den Merkmalen aus dem Oberbegriff des Anspruchs 1 zusätzlich mit den Merkmalen aus dem kennzeichnenden Teil dieses Anspruchs ausstattet.

Bei einer erfindungsgemäßen Vorrichtung sind der Kolben in dem ihn direkt umgebenden Lager und der Schlitten auf dem einen Führungselement geschlossen geführt. Geschlossen geführt heißt dabei, daß das jeweilige Führungselement den Gleitkörper, also den Kolben bzw. den Schlitten, in allen normal zur Schieberichtung liegenden Richtungen fixiert. Auch wenn das den Kolben umgebende Lager ein selbsteinstellendes Lager ist, wird der Kolben dann spielfrei und genau geführt.

Da außerdem das Lager, mit dem der Schlitten auf dem einen Führungselement bewegt wird, zumindest in der durch die beiden Führungselemente bestimmten Ebene selbsteinstellend und in dieser Ebene zwischen dem Schlitten und dem zweiten Führungselement ein Spiel vorhanden ist, können Abweichungen im Abstand und in der Parallelität der beiden Führungselemente vor allem in der durch sie bestimmten Ebene ausgeglichen werden, so daß die Gefahr einer Verklemmung und damit einer Schwergängigkeit des Kolbens sehr gering ist. Am Kolben angreifende Torsionskräfte können natürlich über den Schlitten auch noch über das zweite Führungselement abgeleitet werden. Selbsteinstellend in einer Ebene heißt für ein Lager, daß dieses um eine Achse, die senkrecht auf der Ebene steht, verschwenkbar ist.

Vorteilhafte Ausgestaltungen der Erfindung kann man den Unteransprüchen entnehmen.

So ist es vorteilhaft, wenn das zweite Führungselement durch ein Langloch des Schlittens hindurchgreift. Das Loch wird vollständig von Material umgeben, so daß die Stabilität des Schlittens größer ist, als wenn an Stelle des Langlochs eine sich nach außen öffnende Aussparung verwendet würde. Zweckmäßigerweise wird man das Spiel des Führungselements in dem Langloch gerade so groß machen, daß die maximal vorkommende Abweichung im in der Ebene liegenden Abstand der beiden Führungselemente voneinander ausgleichbar ist.

Bevorzugt wird eine Ausführung, bei der sich gemäß Anspruch 4 das Langloch in einem in den Schlitten eingebrachten zweiten Lager befindet. Um zu verhindern, daß das Langloch seine Lage in ungünstiger Weise verändert, ist gemäß den Ansprüchen 5 und 6 das zweite Lager um bestimmte Achsen verdrehsicher am Schlitten gehalten.

Die Verdrehsicherung kann man auf einfache Weise durch Ausbildungen gemäß den Ansprüchen 7 bis 9 erreichen.

Es ist von Vorteil, wenn gemäß Anspruch 10 beide Lager senkrecht zur Ebene, die von den beiden Führungselementen bestimmt wird, selbsteinstellend sind. Dadurch können evtl. auftretende Toleranzen in der Lage der Führungselemente, vor allem senkrecht zu der erwähnten Ebene, ausgeglichen werden.

Vorteilhafterweise werden gemäß den Ansprüchen 11 und 12 als Lager Kalottenlager verwendet.

Sind gemäß Anspruch 14 die Führungselemente zylindrische Säulen, so trägt dies zu einer guten Führung und zu einer einfachen Herstellung und Montage der einzelnen Teile bei.

Vereinfacht wird die Herstellung und Montage auch, wenn der Schlitten aus Kunststoff besteht.

Ein erfindungsgemäßes Ausführungsbeispiel einer Hub-Wischeranlage ist in den Zeichnungen dargestellt. Anhand der Figuren dieser Zeichnungen soll die Erfindung nun näher erläutert werden.

Es zeigen

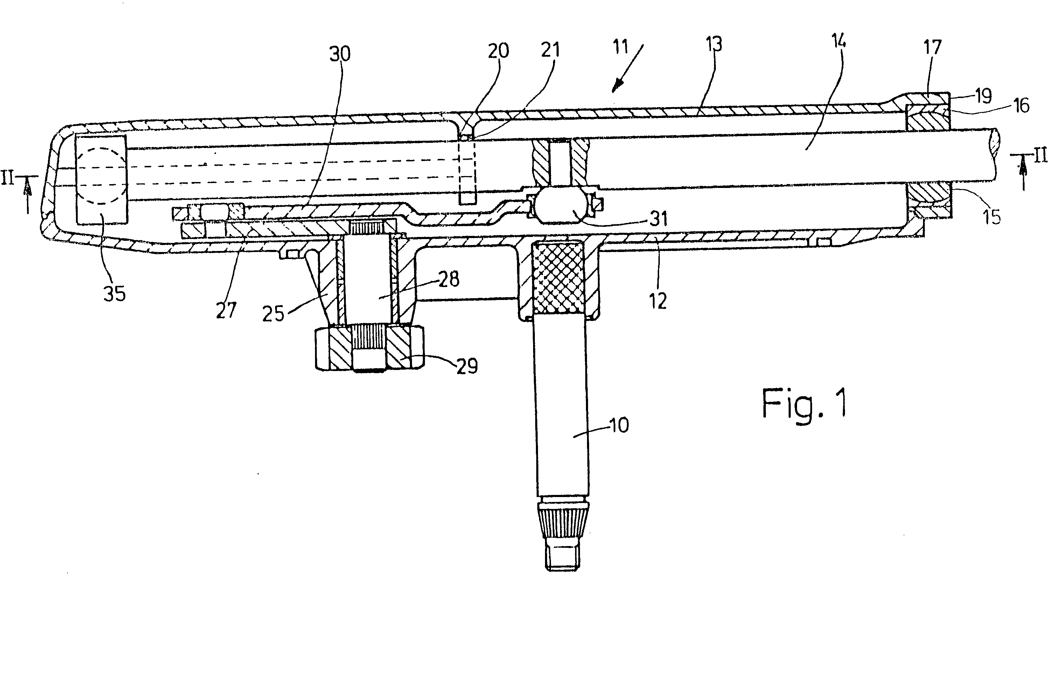

Figur 1 einen Längsschnitt durch das über eine Wischerwelle pendelnde antreibbare Gehäuse einer Hub-Wischeranlage mit einem im Gehäuse gelagerten, längsverschiebbaren Kolben,

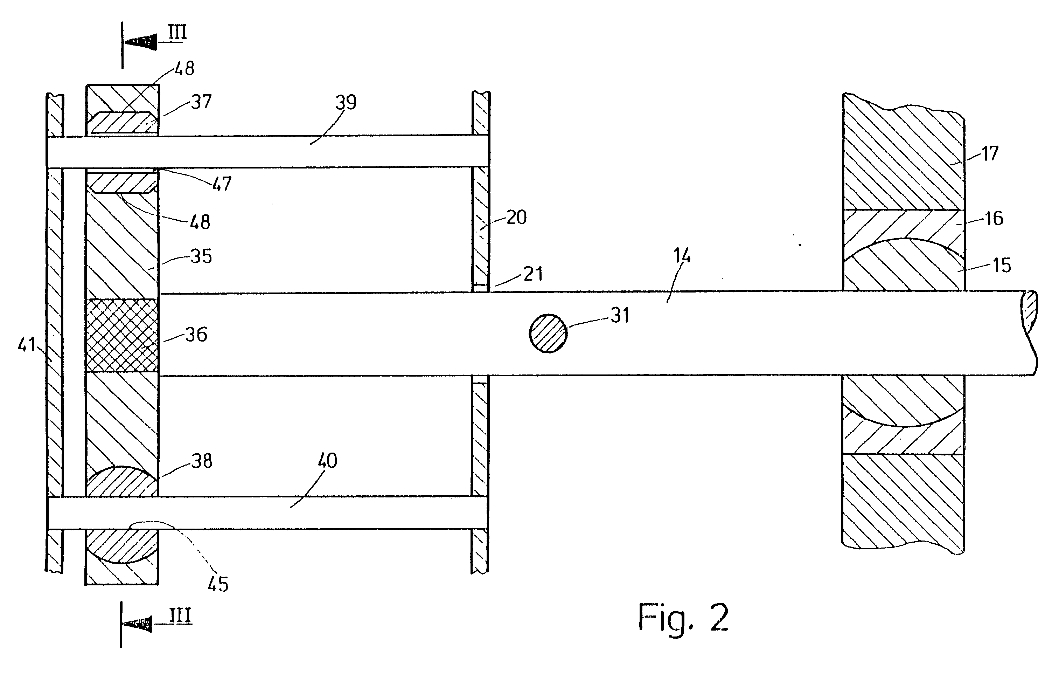

Fig. 2 einen Schnitt entlang der Linie II-II in Fig. 1 durch die fur die Führung des Kolbens wesentlichen Teile der Hub-Wischeranlage, wobei die Abstände der Teile voneinander und die Abmessungen der Teile selbst nicht mit den entsprechenden Maßen aus Fig. 1 übereinstimmen, und

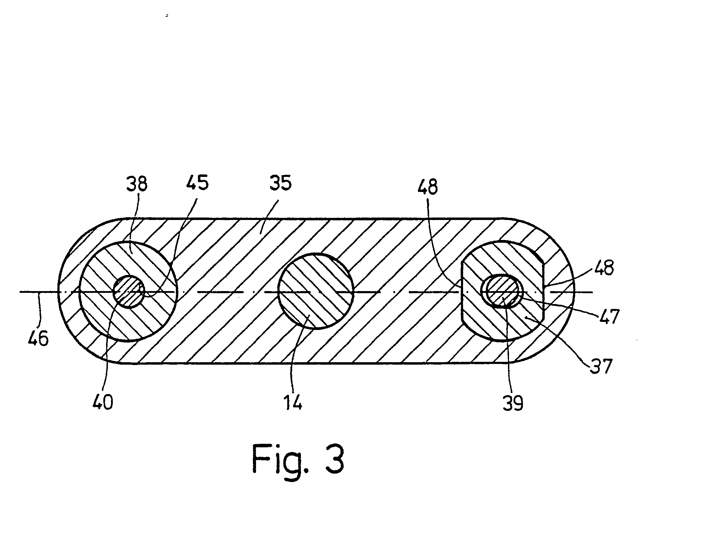

Fig. 3 einen Schnitt entlang der Linie III-III aus Fig.2.

Bei der gezeigten Hub-Wischeranlage ist auf einer Wischerwelle (10) ein Gehäuse (11) verdrehsicher befestigt, das Teil des Wischarms ist und aus zwei Bauteilen, nämlich einer Grundplatte (12) und einem Deckel (13), zusammengesetzt ist. An der Wischerwelle (10) befestigt ist die Grundplatte (12). Innerhalb des Gehäuses (11) ist ein Kolben (14) in einem Kalottenlager (15) gelagert. Dieses befindet sich in der Lageraufnahme (16), die in den Lagersitz (17) des Deckels (13) eingepresst ist. Das Kalottenlager (15) ist als sich selbst einstellendes Lager in zwei senkrecht aufeinander und auf der Längsrichtung des Kolbens (14) stehende Achsen in der Lageraufnahme (16) verschwenkbar. Es schließt sich unmittelbar innen an die Vorderseite (19) des Gehäuses (11) an. Im Abstand zum Kalottenlager (15) befindet sich am Deckel (13) des Gehäuses (11) eine nach innen ragende Querwand (20), die mittig eine Bohrung (21) aufweist, durch die der Kolben (14) frei hindurchtritt.

Zwischen der Querwand (20) und dem Lager (15) ist am Kolben (14) über einen Kugelbolzen (31) eine Koppelstange (30) befestigt, deren anderes Ende gelenkig mit dem freien Ende einer Kurbel (27) verbunden ist. Diese ist verdrehsicher auf einer Welle (28) befestigt, die in einer Hülse (25) der Grundplatte (12) gelagert ist, über diese Grundplatte hinaus vorsteht und dort verdrehsicher ein Zahnrad (29) trägt.

Dieses Zahnrad (29) wird während der pendelnden Bewegung des Gehäuses (11) gedreht. Seine Drehbewegung wird über den Kurbeltrieb in eine hin- und hergehende Bewegung des Kolbens (14) umgewandelt.

Am hinteren Ende des Kolbens (14) ist verdrehsicher mit diesem ein Schlitten (35) gehalten, der nach zwei entgegengesetzten Seiten des Kolbens (14) auslädt. Der Schlitten ist aus Kunststoff gefertigt und wird direkt auf einen geriffelten Abschnitt (36) des Kolbens (14) aufgespritzt. In jeweils gleichem Abstand zum Kolben (14) besitzt der Schlitten (35) auf jeder Seite ein Lager (37) bzw. (38). Beide Lager sind, wie das Lager (15), Gleitlager. Mit den Lagern (37) und (38) ist der Schlitten (35) auf zwei zylindrischen Führungssäulen (39) bzw. (40), die parallel zueinander angeordnet sind, längsgeführt. Die somit insgesamt vorhandenen drei Lagerstellen für den Kolben (14) sind so am Deckel (13) des Gehäuses (11) angeordnet, daß der Kolben (14) gegenüber der Wischerwelle (10) in einer radialen Richtung hin- und herbewegbar ist.

Die beiden Säulen (39) und (40) sind durch Bohrungen in der Querwand (20) und in der endseitigen Stirnwand (41) des Gehäusedekkels (13) eingeschoben und durch Verstemmen befestigt. Sie befinden sich also am selben Bauteil, nämlich dem Deckel (13) des Gehäuses (11), wie das Lager (15). Sie verlaufen parallel zum Kolben (14) und liegen sich bezüglich dieses Kolbens diametral gegenüber. Es ist zwar gesagt worden, daß die beiden Säulen (39) und (40) parallel zueinander liegen. Dies ist grundsätzlich richtig und von der Konstruktion erwünscht. Wegen des Auftretens von Toleranzen muß man jedoch davon ausgehen, daß die tatsächliche Lage der Säulen (39) und (40) zueinander von einer parallelen Lage etwas abweicht.

Derartige Abweichungen könnten zu einer Schwergängigkeit des Kolbens (14) führen. Um dies ohne nachträgliche Justagearbeiten zu verhindern, sind bei einer erfindungsgemäßen Hub-Wischeranlage die beiden Lager (37) und (38) in ganz spezieller Weise ausgebildet. Das Lager (38) besitzt eine Bohrung (45), deren Durchmesser dem Durchmesser der Säule (40) entspricht. Durch das Lager (38) und die Säule (40) ist also eine geschlossene Führung für den Schlitten (35), das heißt eine Führung, die den Schlitten nach allen Richtungen senkrecht zur Längsrichtung der Säule (40) fixiert, realisiert. Der Abstand zwischen dem Kolben (14) und der Säule (40) ist somit fest, so daß der Kolben (14) spielfrei geführt ist. Das Lager (38) ist außerdem ein Kalottenlager, das sowohl um eine Achse, die senkrecht auf der durch die beiden parallelen Säulen (39) und (40) definierten Ebene (46) steht, als auch um eine Achse, die in dieser Ebene liegt und senkrecht zur Längsrichtung der Säule (40) verläuft, verschwenkbar.

Anders als das Kalottenlager (38) besitzt das Lager (37) nicht eine im Querschnitt kreisrunde Bohrung, sondern ein Langloch (47), dessen Längserstreckung in der Ebene (46) liegt. Senkrecht dazu entspricht die Abmessung des Langlochs (47) dem Durchmesser der Säule (39), so daß in dieser Richtung auch die Säule (39) zur Führung des Schlittens (35) und des Kolbens (14) beiträgt. Insbesondere kann sie also Torsionskräfte aufnehmen.

Damit das Langloch (47) sicher seine Position so beibehält, daß seine Längserstreckung immer in der Ebene (46) liegt, sind das Lager (37) und sein Sitz im Schlitten (35) so ausgeführt, daß das Lager um eine Achse parallel zur Längsrichtung der Säule (39) und damit zur Richtung der Bewegung des Kolbens (14) verdrehsicher ist.

Damit das Langloch (47) außerdem nicht in der Ebene (46) verstellbar ist, ist das Lager (37) auch um eine Achse senkrecht zur Ebene (46) verdrehsicher. Außen kann man sich das Lager (37) aus einem Kalottenlager entstanden denken, das an zwei sich diametral gegenüberliegenden Seiten abgeplattet wurde. Das Lager (37) besitzt also zwei abgeplattete, ebene und parallel zueinander verlaufende Flächen (48). Diese beiden Flächen stehen senkrecht auf einer in Längserstreckung des Langlochs (47) verlaufenden Geraden und somit senkrecht auf der Ebene (46), jedoch parallel zur Führungssäule (38). Das Lager (37) ist deshalb noch um eine Achse, die in der Ebene (46) liegt und senkrecht auf der Säule (39) steht, verschwenkbar. Es kann als abgeplattetes Kalottenlager bezeichnet werden.

Bei dem gezeigten Ausführungsbeispiel sind somit alle vorkommenden Toleranzen zwischen den Führungssäulen (39) und (40), sowie zwischen diesen Führungssäulen und der Lageraufnahme (16) für das Lager (15) ausgleichbar. Das Langloch (47) ermöglicht es, Toleranzen im Abstand der beiden Führungssäulen (39) und (40) voneinander auszugleichen. Die Verschwenkbarkeit der Lager (15) und (38) in der Ebene (46) ermöglicht es, Toleranzen im Abstand der Achse der Führungssäule (40) vom Mittelpunkt des Lagers (15) auszugleichen. Schließlich können Toleranzen der drei Lagerstellen senkrecht zur Ebene (46) durch die Verschwenkbarkeit der Lager (15), (37) und (38) um Achsen, die in dieser Ebene liegen, ausgeglichen werden.

## Patentansprüche

1. Vorrichtung, insbesondere Hubwischeranlage für Kraftfahrzeuge, mit einem Kolben (14), der in einem sich selbst einstellenden Lager (15) eines Gehäuses (11) linear verschiebbar geführt ist, und mit einem Schlitten (35), der gegen Verdrehung und Längsverschiebung gesichert und sich wenigstens annähernd senkrecht zum Kolben (14) erstreckend am Kolben (14) gehalten und beidseitig des Kolbens (14) an zwei gehäusefesten Führungselementen (39, 40) längsgeführt ist, dadurch gekennzeichnet, daß der Schlitten (35) auf dem einen Führungselement (40) mit einem Lager (38) geschlossen geführt ist, das zumindest in der durch die beiden Führungselemente (39, 40) bestimmten Ebene (46) selbsteinstellend ist, und daß in dieser Ebene (46) zwischen dem Schlitten (35) und dem zweiten Führungselement (39) ein Spiel vorhanden ist.

2. Vorrichtung nach Anspruch 1, dadurch gekennzeichnet, daß das zweite Führungselement (39) durch ein Langloch (47) des Schlittens (35) hindurchgreift.

3. Vorrichtung nach Anspruch 2, dadurch gekennzeichnet, daß das Spiel in dem Langloch (47) gerade so groß ist, daß die maximal vorkommende Abweichung im in der Ebene (46) liegenden Abstand der beiden Führungselemente (39, 40) voneinander ausgleichbar ist.

4. Vorrichtung nach Anspruch 2 oder 3, dadurch gekennzeichnet, daß sich das Langloch (47) in einem in den Schlitten (35) eingebrachten zweiten Lager (37) befindet.

5. Vorrichtung nach Anspruch 4, dadurch gekennzeichnet, daß das zweite Lager (37) um eine Achse in Bewegungsrichtung des Kolbens (14) verdrehsicher am Schlitten (35) gehalten ist.

6. Vorrichtung nach Anspruch 4 oder 5, dadurch gekennzeichnet, daß das zweite Lager (37) um eine Achse senkrecht zur Ebene (46) verdrehsicher am Schlitten (35) gehalten ist.

7. Vorrichtung nach Asnpruch 5 oder 6, dadurch gekennzeichnet, daß das zweite Lager (37) außen eine abgeplattete Fläche (48) aufweist, die an einer entsprechenden Fläche des Schlittens (35) anliegt.

8. Vorrichtung nach Anspruch 7, dadurch gekennzeichnet, daß eine abgeplattete Fläche (48) des Lagers (37) senkrecht auf der Ebene (46) steht.

9. Vorrichtung nach Anspruch 7 oder 8, dadurch gekennzeichnet, daß das Lager (37) zwei zueinander parallele abgeplattete Flächen (48) aufweist.

10. Vorrichtung nach einem der Ansprüche 4 bis 9, dadurch gekennzeichnet, daß beide Lager (37, 38) senkrecht zur Ebene (46) selbsteinstellend sind.

11. Vorrichtung nach einem der vorhergehenden Ansprüchen, dadurch gekennzeichnet, daß das erste Lager (38) ein Kalottenlager ist.

12. Vorrichtung nach einem der Ansprüche 4 bis 11, dadurch gekennzeichnet, daß das zweite Lager (37) ein Kalottenlager mit mindestens einer abgeplatteten Fläche (48) außen ist.

13. Vorrichtung nach einem der vorhergehenden Ansprüche dadurch gekennzeichnet, daß jedes Lager (15, 37, 38) ein Gleitlager ist.

14. Vorrichtung nach einem der vorhergehenden Ansprüche, dadurch gekennzeichnet, daß die Führungselemente (39, 40) zylindrische Säulen sind.

15. Vorrichtung nach einem der vorhergehenden Ansprüche, dadurch gekennzeichnet, daß beide Führungselemente (39, 40) am selben einstückig ausgebildeten Teil (13) des Gehäuses (11) befestigt sind.

16. Vorrichtung nach einem der vorhergehenden Ansprüche, dadurch gekennzeichnet, daß der Schlitten (35) im wesentlichen aus Kunststoff gefertigt ist und jede Lagerbuchse (37, 38) bewegbar in den Kunststoff eingespritzt ist.

17. Vorrichtung nach einem der vorhergehenden Ansprüche, dadurch gekennzeichnet, daß der Schlitten (35) im wesentlichen aus Kunststoff gefertigt ist und der Kolben (14) in den Schlitten (35) eingespritzt ist.

## Claims

1. A device, especially a travelling wiping device for automotive vehicles, comprising a piston (14) linearly displaceable and guided in a self-adjusting bearing (15) of a housing (11) and comprising a slide (35) held on the piston (14) such that it is protected against twisting and longitudinal displacement and that it extends substantially perpendicular to said piston (14) and is longitudinally guided on both sides of said piston (14) by two guide elements (39, 40) fixed to the housing, characterised in that the slide (35) is guided by a bearing (38) in a closed manner one one guide element (40), which bearing is at least self-adjusting in the plane (46) defined by the two guide elements (39, 40) and that in this plane (46) there is a play between the slide (35) and the second guide element (39).

2. A device according to claim 1, characterised in that the second guide element (39) extends through an oblong hole (47) of the slide (35).

3. A device according to claim 2, characterised in that the play in the oblong hole (47) is such that the maximal tolerance of the spacing between the two guide elements (39, 40) in the plane (46) can be compensated for.

4. A device according to claim 2 or 3, characterised in that the oblong hole (47) is located in a second bearing (37) placed in the slide (35).

5. A device according to claim 4, characterised in that the second bearing (37) is held on the slide (35) in a manner protected against rotation on an axis in the direction of movement of the piston (14).

6. A device according to claim 4 or 5, characterised in that the second bearing (37) is held on the slide (35) in a manner protected against rotation on an axis perpendicularly to the plane (46).

7. A device according to claim 5 or 6, characterised in that the second bearing (37) has a flattened area (48) outwardly which rests against a corresponding area of the slide (35).

8. A device according to claim 7, characterised in that a flattened area (48) of the bearing (37) is perpendicular to said plane (46).

9. A device according to claim 7 or 8, characterised in that the bearing (37) has two flattened areas (48) parallel to each other.

10. A device according to any one of claims 4 to 9, characterised in that both bearings (37, 38) are self-adjusting perpendicularly to the plane (46).

11. A device according to any one of the preceding claims, characterised in that the first bearing (38) is a cap-shaped bearing.

12. A device according to any one of claims 4 to 11, characterised in that the second bearing (37) is a cap-shaped bearing outwardly having at least one flattened area (48).

13. A device according to any one of the preceding claims, characterised in that each bearing (15, 37, 38) is a plain bearing.

14. A device according to any one of the preceding claims, characterised in that the guide elements (39, 40) are cylindric columns.

15. A device according to any one of the preceding claims, characterised in that both guide elements (39, 40) are fastened on the same integrally formed part (13) of the housing (11).

16. A device according to any one of the preceding claims, characterised in that the slide (35) is substantially made of plastic material and each bearing sleeve (37, 38) is movably injection-moulded in said plastic material.

17. A device according to any one of the preceding claims, characterised in that the slide (35) is substantially made of plastic material and the piston (14) is injection-moulded in said slide (35).

**Revendications**

1. Dispositif, en particulier une installation d'essuie-glace levable pour véhicules automobiles, comportant un piston (14), qui est guidé coulissant linéairement dans un palier (15) à alignement automatique d'un boîtier (11), et comportant un coulisseau (35) qui est fixé sur le piston (14) en étant protégé contre la torsion et le coulissement longitudinal et disposé au moins presque perpendiculairement à celui-ci et est guidé longitudinalement des deux côtés du piston (14) sur deux éléments de guidage (39, 40) fixés sur le boîtier, caractérisé en ce que le coulisseau (35) est guidé enfermé sur un élément de guidage (40) avec un palier (38) qui est à alignement automatique au moins dans le plan (46) déterminé par les deux éléments de guidage (39, 40), et en ce qu'un jeu existe dans ce plan (46) entre le coulisseau (35) et le deuxième élément de guidage (39).

2. Dispositif selon la revendication 1, caractérisé en ce que le deuxième élément de guidage (39) traverse un orifice oblongue (47) du coulisseau (35).

3. Dispositif selon la revendication 2, caractérisé en ce que le jeu existant dans l'orifice oblongue (47) est juste assez grand pour que l'écart maximal produit dans l'espacement, situé dans le plan (46), des deux éléments de guidage (39, 40) l'un par rapport à l'autre soit compensable.

4. Dispositif selon l'une quelconque des revendications 2 ou 3, caractérisé en ce que l'orifice oblongue (47) se trouve dans un deuxième palier (37) introduit dans le coulisseau (35).

5. Dispositif selon la revendication 4, caractérisé en ce que le deuxième palier (37) est fixé résistant à la torsion sur le coulisseau (35) autour d'un axe dans le sens de déplacement du piston (14).

6. Dispositif selon l'une quelconque des revendications 4 ou 5, caractérisé en ce que le deuxième palier (37) est fixé résistant à la torsion sur le coulisseau (35) autour d'un axe perpendiculairement au plan (46).

7. Dispositif selon l'une quelconque des revendications 5 ou 6, caractérisé en ce que le deuxième palier (37) présente à l'extérieur une surface aplatie (48) qui repose sur une surface correspondante du coulisseau (35).

8. Dispositif selon la revendication 7, caractérisé en ce qu'une surface aplatie (48) du palier (37) est disposée perpendiculairement au plan (46).

9. Dispositif selon l'une quelconque des revendications 7 ou 8, caractérisé en ce que le palier (37) présente deux surfaces aplaties (48) parallèles l'une à l'autre.

10. Dispositif selon l'une quelconque des revendications 4 à 9, caractérisé en ce que les

deux paliers (37, 38) sont à alignement automatique perpendiculairement au plan (46).

11. Dispositif selon l'une quelconque des revendications précédentes, caractérisé en ce que le premier palier (38) est un palier à calotte.

12. Dispositif selon l'une quelconque des revendications 4 à 11, caractérisé en ce que le deuxième palier (37) est un palier à calotte avec au moins une surface aplatie (48) à l'extérieur.

13. Dispositif selon l'une quelconque des revendications précédentes, caractérisé en ce que chaque palier (15, 37, 38) est un palier lisse.

14. Dispositif selon l'une quelconque des revendications précédentes, caractérisé en ce que les éléments de guidage (39, 40) sont des montants cylindriques.

15. Dispositif selon l'une quelconque des revendications précédentes, caractérisé en ce que les deux éléments de guidage (39, 40) sont fixés sur le même composant (13) configuré en une seule pièce du boîtier (11).

16. Dispositif selon l'une quelconque des revendications précédentes, caractérisé en ce que le coulisseau (35) est réalisé pour l'essentiel en matière plastique et en ce que chaque palier (37, 38) est injecté dans la matière plastique de façon à être mobile.

17. Dispositif selon l'une quelconque des revendications précédentes, caractérisé en ce que le coulisseau (35) est réalisé pour l'essentiel en matière plastique et en ce que le piston (14) est injecté dans le coulisseau (35).

Fig. 1

0 169 363

Fig. 2

Fig. 3